# EUROPEAN PATENT APPLICATION

(11) **EP 4 745 432 A1**
(43) Date of publication of application: **20.05.2026**
(21) Application number: 25208956.0
(22) Date of filing: 15.10.2025
(51) Int. Cl.: F16H 57/04, B60K 11/02, H02K 1/32, H02K 5/20

(54) **VEHICLE DRIVE SYSTEM**

(30) Priority: 14.11.2024 JP 2024199282
(71) Applicant: TOYOTA JIDOSHA KABUSHIKI KAISHA, Toyota-shi, Aichi-ken 471-8571 (JP)
(72) Inventor: SEKIGUCHI, Yoshito, Aichi-ken, 471-8571 (JP)
(74) Representative: D Young & Co LLP

(57) **Abstract**

A vehicle drive system may include: a rotating electric machine including a hollow output shaft; a differential gear that distributes a driving force output by the rotating electric machine to a pair of drive wheels; a case housing the rotating electric machine and the differential gear therein; an intermediate shaft extending through a through hole of the output shaft along an axial direction of the rotating electric machine, wherein one end portion of the intermediate shaft is connected to the differential gear; and a drive shaft fitted at other end portion of the intermediate shaft. The intermediate shaft may include a first flow passage extending along the axial direction. The case may include a second flow passage. A fitting portion between the intermediate shaft and the drive shaft may include a third flow passage that allows a lubricating liquid to flow between the first and second flow passages.

## Description

### CROSS REFERENCE TO RELATED APPLICATION

This application claims priority to Japanese Patent Application No. 2024-199282 filed on November 14, 2024. The entire content of the priority application is incorporated herein by reference.

### TECHNICAL FIELD

The art disclosed herein relates to a vehicle drive system.

### BACKGROUND

Japanese Patent Application Publication 2024-025399 describes a vehicle drive system in which a rotating electric machine is arranged coaxially with a differential gear. In a drive system of this type, the rotating electric machine includes a hollow output shaft, and an intermediate shaft extends through the through hole of the output shaft along an axial direction of the rotating electric machine. One end portion of the intermediate shaft is connected to the differential gear, and the other end portion of the intermediate shaft is fitted at a drive shaft.

The intermediate shaft defines therein a flow passage through which a lubricating liquid flows to lubricate lubrication targets such as the rotating electric machine. The flow passage of the intermediate shaft is configured to supply the lubricating liquid toward the lubrication targets at respective positions of the lubrication targets. The lubricating liquid is supplied to the flow passage of the intermediate shaft from a flow passage defined in a case that houses the rotating electric machine and the differential gear.

### SUMMARY

In the drive system of Japanese Patent Application Publication 2024-025399, one end of the flow passage of the intermediate shaft is open at the outer surface of the intermediate shaft, and the flow passage of the case is connected to the flow passage of the intermediate shaft at this opening position. The fitting portion between the intermediate shaft and the drive shaft is designed not to interfere with the flow passage of the intermediate shaft. That is, the drive shaft is located outward of the connection position of the flow passages relative to the rotating electric machine and the differential gear. Such a configuration may hinder the drive shaft from having a sufficient overall length in a vehicle with a constant vehicle width, which may result in a narrowed range of movement for wheels. The disclosure herein provides an advantageous vehicle drive system that ensures an increased overall length of a drive shaft.

A vehicle drive system disclosed herein may comprise a rotating electric machine comprising a hollow output shaft; a differential gear configured to distribute a driving force output by the rotating electric machine to a pair of drive wheels; a case housing the rotating electric machine and the differential gear therein; an intermediate shaft extending through a through hole of the output shaft along an axial direction of the rotating electric machine, wherein one end portion of the intermediate shaft is connected to the differential gear; and a drive shaft fitted at other end portion of the intermediate shaft. The intermediate shaft may comprise a first flow passage extending along the axial direction. The case may comprise a second flow passage. A fitting portion between the intermediate shaft and the drive shaft may comprise a third flow passage that allows a lubricating liquid to flow between the first flow passage and the second flow passage. The flow direction of the lubricating liquid in the third flow passage is not particularly limited. For example, the lubricating liquid may flow from the second flow passage to the first flow passage via the third flow passage.

### BRIEF DESCRIPTION OF DRAWINGS

FIG. 1 is a schematic diagram of a configuration of vehicle.
FIG. 2 is a skeleton diagram of a drive system mounted in the vehicle.
FIG. 3 is a schematic cross-sectional view of relevant components in and around a fitting portion between an intermediate shaft and a drive shaft in an embodiment.
FIG. 4 is a schematic cross-sectional view of relevant components around a fitting portion between an intermediate shaft and a drive shaft in an embodiment.
FIG. 5 is a schematic perspective view of a ring member incorporated in the embodiment shown in FIG. 4.
FIG. 6 is a schematic cross-sectional view of relevant components in and around a differential gear in an embodiment.

### DETAILED DESCRIPTION

In one aspect of the present teachings, a vehicle drive system may comprise a rotating electric machine comprising a hollow output shaft; a differential gear configured to distribute a driving force output by the rotating electric machine to a pair of drive wheels; a case housing the rotating electric machine and the differential gear therein; an intermediate shaft extending through a through hole of the output shaft along an axial direction of the rotating electric machine, wherein one end portion of the intermediate shaft is connected to the differential gear; and a drive shaft fitted at other end portion of the intermediate shaft. The intermediate shaft may comprise a first flow passage extending along the axial direction. The case may comprise a second flow passage. A fitting portion between the intermediate shaft and the drive shaft may comprise a third flow passage that allows a lubricating liquid to flow between the first flow passage and the second flow passage.

In the vehicle drive system above, the third flow passage is formed in the fitting portion between the intermediate shaft and the drive shaft. This allows the drive shaft to be located closer to the rotating electric machine and the differential gear. The vehicle drive system above thus has an advantageous structure that ensures an increased overall length of the drive shaft.

In one aspect of the present teachings, the case may comprise a port through which the drive shaft extends. The second flow passage and the third flow passage may be connected to each other at the port.

In one aspect of the present teachings, the intermediate shaft may comprise an insertion hole in the other end portion of the intermediate shaft, wherein the drive shaft may be inserted in the insertion hole. An end surface of the drive shaft may face a bottom surface of the insertion hole. The first flow passage may open at the bottom surface of the insertion hole.

In the aspect where the intermediate shaft comprises the insertion hole, the third flow passage may comprise a first communication flow passage defined in the intermediate shaft, wherein one end of the first communication flow passage opens at an outer surface of the intermediate shaft and other end of the first communication flow passage opens at an inner surface of the intermediate shaft that defines the insertion hole; and a second communication flow passage defined in the drive shaft, wherein one end of the second communication flow passage opens at an outer surface of the drive shaft and other end of the second communication flow passage opens at the end surface of the drive shaft. The other end of the first communication flow passage and the one end of the second communication flow passage may face each other. In this aspect, the third flow passage may further comprise a third communication flow passage defined between the inner surface of the intermediate shaft and the outer surface of the drive shaft. The third communication flow passage may extend from a first position to a second position, wherein the first position is adjacent to the other end of the first communication flow passage and the second position is on the end surface of the drive shaft.

In the aspect where the intermediate shaft comprises the insertion hole, the third flow passage may comprise a first communication flow passage defined in the intermediate shaft, wherein one end of the first communication flow passage opens at an outer surface of the intermediate shaft and other end of the first communication flow passage opens at an inner surface of the intermediate shaft that defines the insertion hole; and a third communication flow passage defined between the inner surface of the intermediate shaft and an outer surface of the drive shaft. The third communication flow passage may extend from a first position to a second position, wherein the first position is adjacent to the other end of the first communication flow passage, and the second position is on the end surface of the drive shaft.

In one aspect of the present teachings, the intermediate shaft and the drive shaft may be spline-fitted to each other via internal spline teeth on the inner surface of the intermediate shaft and external spline teeth on the outer surface of the drive shaft. At least a part of the third communication flow passage may be formed of a gap between the internal spline teeth and the external spline teeth.

In the aspect where the intermediate shaft comprises the insertion hole, the vehicle drive system may further comprise a hollow ring member located between an inner surface of the intermediate shaft that defines the insertion hole and an outer surface of the drive shaft. An end surface of the ring member may face the bottom surface of the insertion hole. The third flow passage may comprise a first communication flow passage defined in the intermediate shaft, wherein one end of the first communication flow passage opens at an outer surface of the intermediate shaft and other end of the first communication flow passage opens at the inner surface of the intermediate shaft; and a fourth communication flow passage defined in the ring member. The fourth communication flow passage may extend from a first position to a second position, wherein the first position is adjacent to the other end of the first communication flow passage, and the second position is on the end surface of the ring member.

In one aspect of the present teachings, the fourth communication flow passage may be a groove defined in an outer surface of the ring member.

In one aspect of the present teachings, the ring member may be press-fitted in the insertion hole of the intermediate shaft. The drive shaft and the ring member may be spline-fitted to each other.

Representative, non-limiting examples of the present disclosure will now be described in further detail with reference to the attached drawings. This detailed description is merely intended to teach a person of skill in the art further details for practicing preferred aspects of the present teachings and is not intended to limit the scope of the disclosure. Furthermore, each of the additional features and teachings disclosed below may be utilized separately or in conjunction with other features and teachings to provide improved vehicle drive systems, as well as methods for using and manufacturing the same.

Moreover, combinations of features and steps disclosed in the following detailed description may not be necessary to practice the disclosure in the broadest sense, and are instead taught merely to particularly describe representative examples of the disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

A drive system mounted in a vehicle is described with reference to the drawings. In some drawings, directions correspond to directions of the vehicle. A direction FR indicates the front direction of the front-rear direction of the vehicle, and a direction RR indicates the rear direction of the front-rear direction of the vehicle. A direction LH indicates the left direction of the right-left direction of the vehicle, and a direction RH indicates the right direction of the right-left direction of the vehicle. A direction UP indicates the up direction of the up-down direction of the vehicle, and a direction DW indicates the down direction of the up-down direction of the vehicle.

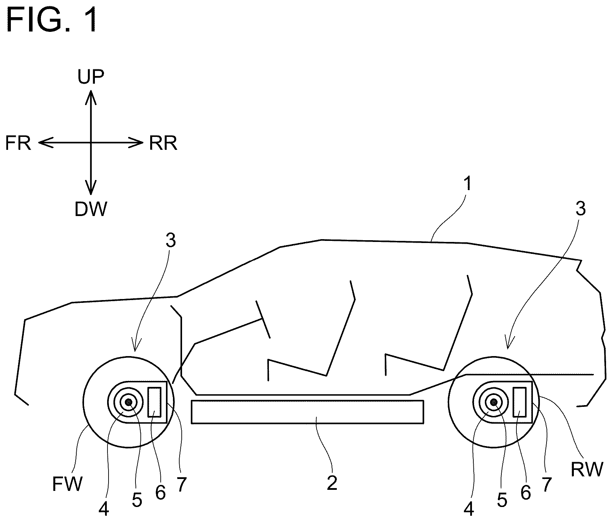

FIG. 1 shows a configuration of a vehicle 1. The vehicle 1 comprises at least a rotating electric machine as a drive source. The vehicle 1 may be, for example, an electric vehicle, a hybrid vehicle, or a fuel vehicle.

The vehicle 1 comprises a battery pack 2 located below its floor and a pair of drive systems 3. The battery pack 2 supplies power to each of the drive systems 3. One of the drive systems 3 drives front wheels FW using the supplied power, while the other drive system 3 drives rear wheels RW using the supplied power. Although the vehicle 1 is exemplified as a four-wheel vehicle, it may be a two-wheel vehicle comprising only one of the pair of drive systems 3. Since the drive systems 3 have the same configuration, the drive systems 3 will be described hereinafter without distinction therebetween.

Each drive system 3 comprises a rotating electric machine 4, a transmitter 5, a power control unit (PCU) 6, and a case 7. The rotating electric machine 4, the transmitter 5, and the PCU 6 are housed in the case 7. The PCU 6 is located adjacent to the rotating electric machine 4 and the transmitter 5 in the front-rear direction of the vehicle (in this example, located rearward of the rotating electric machine 4 and the transmitter 5). The PCU 6 converts the power supplied from the battery pack 2 from DC power to AC power and supplies it to the rotating electric machine 4. The rotating electric machine 4 generates a drive force based on the AC power supplied from the PCU 6. The transmitter 5 amplifies torque of the drive force generated by the rotating electric machine 4 and then distributes it to the right and left wheels.

The rotating electric machine 4 is arranged coaxially with the transmitter 5. This allows for a reduction in the dimension of the case 7 in the up-down direction of the vehicle which houses the rotating electric machine 4 and the transmitter 5. In right and left side views of the vehicle, each case 7 is located within a range of corresponding wheel FW or RW. This allows for, for example, an improved degree of freedom in the arrangement of various electric components, such as a radiator and an air-conditioning control system, in a front portion of the vehicle 1, thereby ensuring a larger space for a user. Further, the above configuration also allows for, for example, a larger trunk space or a larger reclining angle range of rear seats in a rear portion of the vehicle 1.

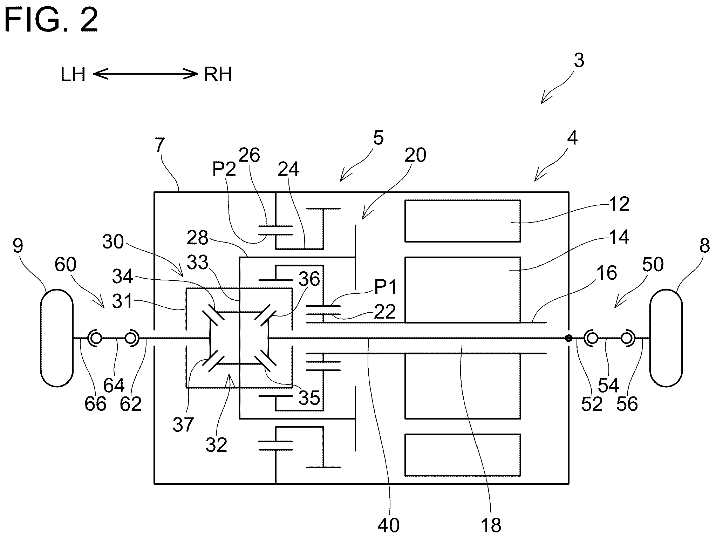

FIG. 2 shows a skeleton diagram of the drive system 3 comprising the rotating electric machine 4 and the transmitter 5 housed in the case 7. In this example, the rotating electric machine 4 is located in a right portion of the case 7, and the transmitter 5 is located in a left portion of the case 7. Instead of this, the transmitter 5 may be located in the right portion of the case 7, and the rotating electric machine 4 may be located in the left portion of the case 7. In the following description, some components may be referred to by names with "right" or "left", however, these names are used for the sake of explanatory convenience only and do not limit positions of the components.

The rotating electric machine 4 comprises a stator core 12, a rotor 14, and an output shaft 16. The stator core 12 is fixed to the case 7. The rotor 14 is supported by the case 7 such that the rotor 14 is freely rotatable about a rotation axis of the rotating electric machine 4. The output shaft 16 is connected to the rotor 14 and rotates integrally with the rotor 14. The output shaft 16 is hollow and has a through hole 18 extending along the rotation axis of the rotating electric machine 4.

The transmitter 5 comprises a planetary gear train 20 and a differential gear 30. The planetary gear train 20 reduces the rotating speed of the output shaft 16 of the rotating electric machine 4. The differential gear 30 distributes the drive force of the rotating electric machine 4 transmitted via the planetary gear train 20 to a right wheel 8 and a left wheel 9. The rotating electric machine 4 is arranged coaxially with the planetary gear train 20 and the differential gear 30. A configuration of the transmitter 5 to be described hereinafter is merely an example, and other configurations can be used as needed.

The planetary gear train 20 comprises a sun gear 22, a plurality of stepped pinion gears 24, a ring gear 26, and a carrier 28. The sun gear 22 is connected to the output shaft 16 of the rotating electric machine 4 and rotates integrally with the output shaft 16. Each of the stepped pinion gears 24 comprises a large-diameter pinion gear P1 and a small-diameter pinion gear P2 having a smaller diameter than the large-diameter pinion gear P1. The large-diameter pinion gear P1 is meshed with the sun gear 22. The small-diameter pinion gear P2 is meshed with the ring gear 26. The ring gear 26 is fixed to the case 7. The carrier 28 supports the plurality of stepped pinion gear 24 such that the stepped pinon gears 24 are freely rotatable. Thus, in the planetary gear train 20, the sun gear 22 is an input element, the ring gear 26 is a reaction element, and the carrier 28 is an output element.

The differential gear 30 comprises a differential case 31 and a differential gear mechanism 32. The differential case 31 is supported by the case 7 such that it is freely rotatable about the rotation axis of the rotating electric machine 4. The differential case 31 is connected to the carrier 28 of the planetary gear train 20 and rotates integrally with the carrier 28. The differential gear mechanism 32 is housed in the differential case 31.

The differential gear mechanism 32 comprises a pinion shaft 33, a pair of differential pinion gears 34, 35, a right side gear 36, and a left side gear 37.

The pinion shaft 33 is connected to the differential case 31 and rotates integrally with the differential case 31. The pinion shaft 33 extends inside the differential case 31 along a direction perpendicular to the rotation axis of the rotating electric machine 4. Each of the differential pinion gears 34, 35 is supported by the pinion shaft 33 such that they are freely rotatable about the axis of the pinion shaft 33. The right side gear 36 outputs the drive force to the right wheel 8 and is meshed with each of the differential pinion gears 34, 35. The left side gear 37 outputs the drive force to the left wheel 9 and is meshed with each of the differential pinion gears 34, 35.

The drive system 3 further comprises an intermediate shaft 40, a right drive shaft 50 connected to the right wheel 8, and a left drive shaft 60 connected to the left wheel 9.

The intermediate shaft 40 extends through the through hole 18 of the output shaft 16 along the direction of the rotation axis of the rotating electric machine 4. A left end portion of the intermediate shaft 40 is connected to the right side gear 36 of the differential gear 30, and a right end portion of the intermediate shaft 40 is connected to the right drive shaft 50.

The right drive shaft 50 comprises a drive shaft inboard portion 52, a drive shaft middle portion 54, and a drive shaft outboard portion 56. The drive shaft inboard portion 52 refers to a left end portion of the right drive shaft 50, which is one of axially opposite end portions of the right drive shaft 50 and is inserted into the case 7. The drive shaft inboard portion 52 spans from a constant-velocity joint to the left end surface of the right drive shaft 50. The drive shaft outboard portion 56 refers to a right end portion of the right drive shaft 50, which is the other of the axially opposite end portions of the right drive shaft 50 and is connected to the right wheel 8. The drive shaft outboard portion 56 spans from the constant-velocity joint to the right end surface of the right drive shaft 50. The drive shaft inboard portion 52 of the right drive shaft 50 is connected to the right side gear 36 of the differential gear 30 via the intermediate shaft 40. The drive force output from the right side gear 36 is transmitted to the right drive shaft 50 via the intermediate shaft 40.

The left drive shaft 60 comprises a drive shaft inboard portion 62, a drive shaft middle portion 64, and a drive shaft outboard portion 66. The drive shaft inboard portion 62 refers to a right end portion of the left drive shaft 60, which is one of axially opposite end portions of the left drive shaft 60 and is inserted into the case 7. The drive shaft inboard portion 62 spans from a constant-velocity joint to the right end surface of the left drive shaft 60. The drive shaft outboard portion 66 refers to a left end portion of the left drive shaft 60, which is the other of the axially opposite end portions of the left drive shaft 60 and is connected to the left wheel 9. The drive shaft outboard portion 66 spans from the constant-velocity joint to the left end surface of the left drive shaft 60. The drive shaft inboard portion 62 of the left drive shaft 60 is connected to the left side gear 37 of the differential gear 30. The drive force output from the left side gear 37 is transmitted directly to the left drive shaft 60.

In the drive system 3, a flow passage is defined in the intermediate shaft 40, and a lubricating liquid flows through the flow passage to lubricate and cool lubrication targets such as the rotating electric machine 4 and the transmitter 5. The flow passage of the intermediate shaft 40 is configured such that the lubricating liquid is supplied toward the lubrication targets at the positions of the lubrication targets. The lubricating liquid is suctioned, for example, by a pump, from a reservoir on the bottom of the case 7, is cooled, for example, by a heat exchanger, and is then supplied to the flow passage of the intermediate shaft 40. In the drive system 3, the cooled lubricating liquid is supplied to the flow passage of the intermediate shaft 40 via a flow passage defined in the case 7.

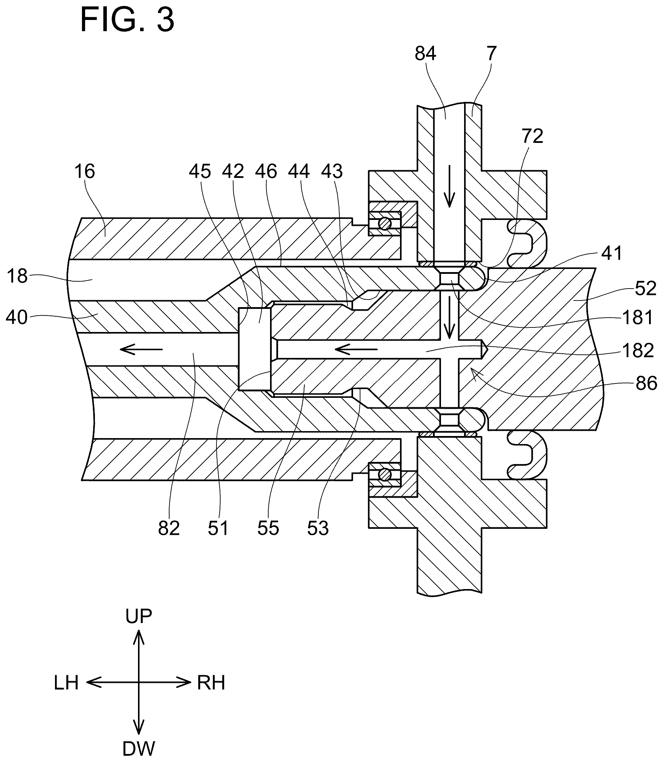

FIG. 3 shows a cross-sectional view near the fitting portion between the intermediate shaft 40 and the drive shaft inboard portion 52 of the right drive shaft 50. The "fitting portion" herein refers to a portion that comprises both the right end portion of the intermediate shaft 40 and the left end portion of the drive shaft inboard portion 52 and extends in the direction of the rotation axis from a right end surface 41 of the intermediate shaft 40 to a left end surface 51 of the drive shaft inboard portion 52.

An insertion hole 42 is formed in the right end portion of the intermediate shaft 40, and the insertion hole 42 is configured to allow the drive shaft inboard portion 52 to be inserted thereto. Inner spline teeth 44 are formed on an inner surface 43 of the intermediate shaft 40 that defines the insertion hole 42. Outer spline teeth 55 are formed on an outer surface 53 of the drive shaft inboard portion 52. The intermediate shaft 40 and the drive shaft inboard portion 52 are spline-fitted to each other via the inner spline teeth 44 of the intermediate shaft 40 and the outer spline teeth 55 of the drive shaft inboard portion 52. The left end surface 51 of the drive shaft inboard portion 52 faces a bottom surface 45 of the insertion hole 42. The left end surface 51 of the drive shaft inboard portion 52 is spaced from the bottom surface 45 of the insertion hole 42. The spacing between the left end surface 51 of the drive shaft inboard portion 52 and the bottom surface 45 of the insertion hole 42 allows the lubricating liquid to be supplied to a spline-fitting portion formed of the inner spline teeth 44 of the intermediate shaft 40 and the outer spline teeth 55 of the drive shaft inboard portion 52.

The intermediate shaft 40 defines a first flow passage 82 extending along the axial direction of the intermediate shaft 40. One end of the first flow passage 82 is open at the bottom surface 45 of the insertion hole 42. One or more supply holes are formed in the intermediate shaft 40 at positions where the lubrication targets are present. The one or more supply holes extend in a direction perpendicular to the axial direction of the intermediate shaft 40 from the first flow passage 82 to an outer surface 46 of the intermediate shaft 40. The lubricating liquid supplied to the first flow passage 82 is supplied to the lubrication targets through the one or more supply holes.

A port 72 is formed in the case 7, and the drive shaft inboard portion 52 extends through the port 72. A part of the drive shaft inboard portion 52 is within the case 7 and fitted to the intermediate shaft 40 inside the case 7. The case 7 defines a second flow passage 84, and the second flow passage 84 is located above the port 72. One end of the second flow passage 84 is open at a surface that defines the port 72.

The fitting portion between the intermediate shaft 40 and the drive shaft inboard portion 52 defines a third flow passage 86. The third flow passage 86 comprises a first communication flow passage 181 defined in the intermediate shaft 40 and a second communication flow passage 182 defined in the drive shaft inboard portion 52.

The first communication flow passage 181 is a through hole that penetrates the intermediate shaft 40 in its radial direction and is formed in a portion of the intermediate shaft 40 surrounding the insertion hole 42. One end of the first communication flow passage 181 is open at the outer surface 46 of the intermediate shaft 40, and the other end of the first communication flow passage 181 is open at the inner surface 43 of the intermediate shaft 40. In a radial view of the intermediate shaft 40, a region where the second flow passage 84 is present at the port 72 of the case 7 overlaps a region where the first communication flow passage 181 is present at the outer surface 46 of the intermediate shaft 40.

The second communication flow passage 182 is a through hole extending through the drive shaft inboard portion 52. One end of the second communication flow passage 182 is open at the outer surface 53 of the drive shaft inboard portion 52, and the other end of the second communication flow passage 182 is open at the left end surface 51 of the drive shaft inboard portion 52. The first communication flow passage 181 faces the second communication flow passage 182 between the inner surface 43 of the intermediate shaft 40 and the outer surface 53 of the drive shaft inboard portion 52.

The arrows depicted in the flow passages 82, 84, 86 indicate directions of the lubricating liquid flowing through the flow passages 82, 84, 86. As described above, the third flow passage 86, which comprises the first and second communication flow passages 181 and 182, is defined in the fitting portion between the intermediate shaft 40 and the drive shaft inboard portion 52. The lubricating liquid supplied through the second flow passage 84 of the case 7 flows through the third flow passage 86 to the first flow passage 82 of the intermediate shaft 40.

Defining the third flow passage 86 in the fitting portion between the intermediate shaft 40 and the drive shaft inboard portion 52 allows the drive shaft inboard portion 52 to be located closer to the rotating electric machine 4 and the differential gear 30. This allows the right drive shaft 50 to have an increased overall length in the vehicle with a constant width, allowing for an extended range of movement for the wheels.

In the example above, the left end surface 51 of the drive shaft inboard portion 52 is spaced from the bottom surface 45 of the insertion hole 42, however, the left end surface 51 of the drive shaft inboard portion 52 may be in contact with the bottom surface 45 of the insertion hole 42. Further, in the example above, the lubricating liquid flows via the second communication flow passage 182 defined in the drive shaft inboard portion 52. In addition to or in place of this second communication flow passage 182, a communication flow passage may be defined between the inner surface 43 of the intermediate shaft 40 and the outer surface 53 of the drive shaft inboard portion 52. This communication flow passage may be formed of a gap between the inner surface 43 of the intermediate shaft 40 and the outer surface 53 of the drive shaft inboard portion 52. In case the second communication flow passage 182 is defined in the drive shaft inboard portion 52, the lubricating liquid outflowing from the connection between the first and second communication flow passages 181 and 182 may flow into the additional communication passage between the inner surface 43 of the intermediate shaft 40 and the outer surface 53 of the drive shaft inboard portion 52. Although there is the spline-fitting portion, which is formed of the inner spline teeth 44 of the intermediate shaft 40 and the outer spline teeth 55 of the drive shaft inboard portion 52, between the inner surface 43 of the intermediate shaft 40 and the outer surface 53 of the drive shaft inboard portion 52, gap(s) are defined between top surfaces of the spline teeth of one of the intermediate shaft 40 and the drive shaft inboard portion 52 and bottom surfaces of the spline teeth of the other, and thus the lubricating liquid can flow through the gap(s). The communication flow passage defined between the inner surface 43 of the intermediate shaft 40 and the outer surface 53 of the drive shaft inboard portion 52 allows for a reduction in the amount of lubricating liquid flowing through the second communication flow passage 182. This enables a reduction in the sectional area of the second communication flow passage 182 or a design without the second communication flow passage 182, suppressing a decrease in the strength of the drive shaft inboard portion 52.

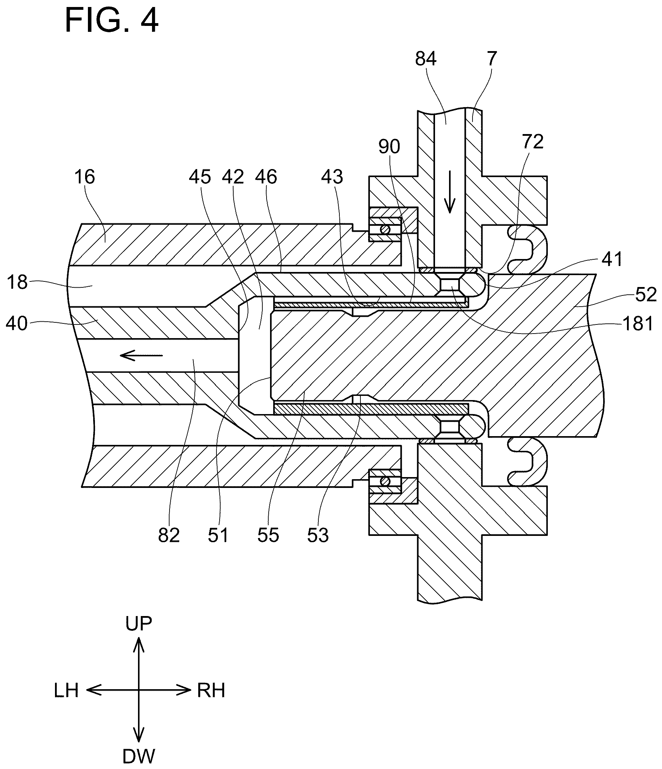

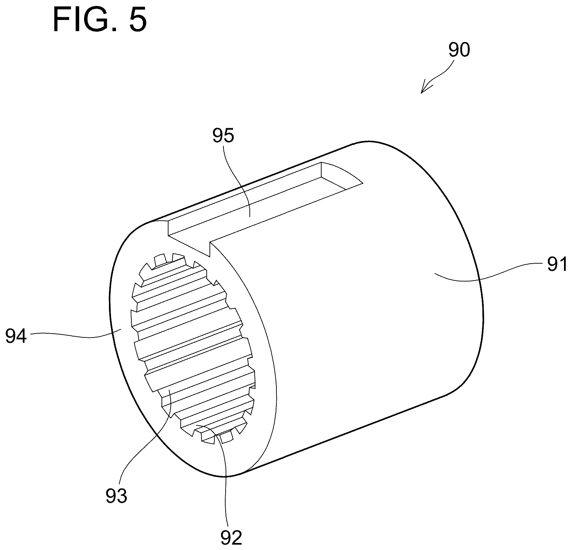

As shown in FIGS. 4 and 5, a hollow ring member 90 may be located between the inner surface 43 of the intermediate shaft 40 and the outer surface 53 of the drive shaft inboard portion 52. The ring member 90 is press-fitted in the insertion hole 42 of the intermediate shaft 40. An outer surface 91 of the ring member 90 may be knurled to improve the fixing between the ring member 90 and the intermediate shaft 40. Instead of this, a mechanical structure, such as splines, may be formed on each of the outer surface 91 of the ring member 90 and the inner surface 43 of the intermediate shaft 40.

Inner spline teeth 93 are formed on an inner surface 92 of the ring member 90. The ring member 90 and the drive shaft inboard portion 52 are spline-fitted to each other via the inner spline teeth 93 of the ring member 90 and the outer spline teeth 55 of the drive shaft inboard portion 52.

A groove 95 is formed in the outer surface 91 of the ring member 90. The groove 95 does not extend all the way from one end of the ring member 90 to the other end thereof along the axial direction of the ring member 90. The groove 95 extends from a position adjacent to the first communication flow passage 181 defined in the intermediate shaft 40 to one end surface 94 of the ring member 90. The end surface 94 faces the bottom surface 45 of the insertion hole 42 of the intermediate shaft 40.

With the ring member 90, the lubricating liquid supplied through the second flow passage 84 of the case 7 flows through the groove 95 of the ring member 90 to the first flow passage 82 of the intermediate shaft 40. Thus, there is no need to define a communication flow passage in the drive shaft inboard portion 52. This suppresses a decrease in the strength of the drive shaft inboard portion 52.

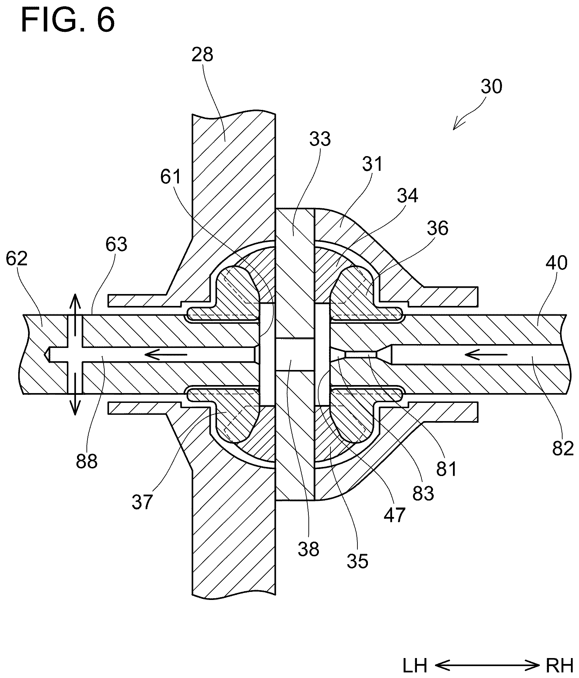

FIG. 6 shows a cross-sectional view of the differential gear 30. The left end portion of the intermediate shaft 40 is spline-fitted to the right side gear 36. The left end portion of the intermediate shaft 40 extends through the right side gear 36, and the left end surface 47 of the intermediate shaft 40 faces the pinion shaft 33. The first flow passage 82 defined in the intermediate shaft 40 is open at the left end surface 47 of the intermediate shaft 40.

The drive shaft inboard portion 62 of the left drive shaft 60 is spline-fitted to the left side gear 37. The drive shaft inboard portion 62 extends through the left side gear 37, and the right end surface 61 of the drive shaft inboard portion 62 faces the pinion shaft 33. A fourth flow passage 88 is defined in the drive shaft inboard portion 62. One end of the fourth flow passage 88 is open at the right end surface 61 of the drive shaft inboard portion 62. The other end of the fourth flow passage 88 is open at the outer surface 63 of the drive shaft inboard portion 62 outside the differential case 31.

A relay hole 38 is formed in the pinion shaft 33. The relay hole 38 is a through hole that penetrates the pinon shaft 33 in a direction perpendicular to the axial direction of the pinion shaft 33, i.e., in the axial direction of the intermediate shaft 40. In an axial view of the intermediate shaft 40, a region of the first flow passage 82 at the left end surface 47 of the intermediate shaft 40 is within a region of the relay hole 38. Further, in the axial view of the intermediate shaft 40, a region of the fourth flow passage 88 at the right end surface 61 of the drive shaft inboard portion 62 is within the region of the relay hole 38. The relay hole 38 arranged as above allows the lubricating liquid from the first flow passage 82 to flow through the relay hole 38 to the fourth flow passage 88. The lubricating liquid in the fourth flow passage 88 outflows from the opening at the outer surface 63 of the drive shaft inboard portion 62 toward the lubrication targets such as an oil sheet.

The first flow passage 82 of the intermediate shaft 40 further comprises a narrowed portion 81 having a smaller sectional area and an outlet 83 located between the narrowed portion 81 and the left end surface 47 of the intermediate shaft 40. The narrowed portion 81 is located near the left end surface 47 of the intermediate shaft 40. The narrowed portion 81 is located inside the differential case 31, more specifically inside the right side gear 36. The outlet 83 has a sectional area that gradually increases from the narrowed portion 81 toward the left end surface 47 of the intermediate shaft 40. This structure allows the lubricating liquid to gush out from the outlet 83, allowing the lubricating liquid to efficiently flow into the fourth flow passage 88.

In the examples above, the lubricating liquid flows from the right drive shaft 50 to the left drive shaft 60 via the intermediate shaft 40. Instead of this, the lubricating liquid may flow from the left drive shaft 60 to the right drive shaft 50 via the intermediate shaft 40.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A vehicle drive system (3), comprising:
a rotating electric machine (4) comprising a hollow output shaft (16);
a differential gear (30) configured to distribute a driving force output by the rotating electric machine (4) to a pair of drive wheels (8, 9);
a case (7) housing the rotating electric machine (4) and the differential gear (30) therein;
an intermediate shaft (40) extending through a through hole (18) of the output shaft (16) along an axial direction of the rotating electric machine (4), wherein one end portion of the intermediate shaft (40) is connected to the differential gear (30); and
a drive shaft (50) fitted at other end portion of the intermediate shaft (40),
wherein
the intermediate shaft (40) comprises a first flow passage (82) extending along the axial direction,
the case (7) comprises a second flow passage (84), and
a fitting portion between the intermediate shaft (40) and the drive shaft (50) comprises a third flow passage (86) that allows a lubricating liquid to flow between the first flow passage (82) and the second flow passage (84).

2. The vehicle drive system (3) according to claim 1, wherein
the case (7) comprises a port (72) through which the drive shaft (50) extends, and
the second flow passage (84) and the third flow passage (86) are connected to each other at the port (72).

3. The vehicle drive system (3) according to claim 1, wherein
the intermediate shaft (40) comprises an insertion hole (42) in the other end portion of the intermediate shaft (40), wherein the drive shaft (50) is inserted in the insertion hole (42), an end surface (51) of the drive shaft (50) faces a bottom surface (45) of the insertion hole (42), and
the first flow passage (82) opens at the bottom surface (45) of the insertion hole (42).

4. The vehicle drive system (3) according to claim 3, wherein
the third flow passage (86) comprises:
a first communication flow passage (181) defined in the intermediate shaft (40), wherein one end of the first communication flow passage (181) opens at an outer surface (46) of the intermediate shaft (40) and other end of the first communication flow passage (181) opens at an inner surface (43) of the intermediate shaft (40) that defines the insertion hole (42); and
a second communication flow passage (182) defined in the drive shaft (50), wherein one end of the second communication flow passage (182) opens at an outer surface (53) of the drive shaft (50) and other end of the second communication flow passage opens (182) at the end surface (51) of the drive shaft (50), and
the other end of the first communication flow passage (181) and the one end of the second communication flow passage (182) face each other.

5. The vehicle drive system (3) according to claim 4, wherein
the third flow passage (86) further comprises:
a third communication flow passage defined between the inner surface (43) of the intermediate shaft (40) and the outer surface (53) of the drive shaft (50), wherein the third communication flow passage extends from a first position to a second position, the first position is adjacent to the other end of the first communication flow passage (181), and the second position is on the end surface of the drive shaft (50).

6. The vehicle drive system (3) according to claim 3, wherein
the third flow passage (86) comprises:
a first communication flow passage (181) defined in the intermediate shaft (40), wherein one end of the first communication flow passage (181) opens at an outer surface (46) of the intermediate shaft (40) and other end of the first communication flow passage (181) opens at an inner surface (43) of the intermediate shaft (40) that defines the insertion hole (42); and
a third communication flow passage defined between the inner surface (43) of the intermediate shaft (40) and an outer surface (53) of the drive shaft (50), wherein the third communication flow passage extends from a first position to a second position, the first position is adjacent to the other end of the first communication flow passage (181), and the second position is on the end surface of the drive shaft (50).

7. The vehicle drive system (3) according to claim 5 or 6, wherein
the intermediate shaft (40) and the drive shaft (50) are spline-fitted to each other via internal spline teeth (44) on the inner surface (43) of the intermediate shaft (40) and external spline teeth (55) on the outer surface (53) of the drive shaft (50), and
at least a part of the third communication flow passage is formed of a gap between the internal spline teeth (44) and the external spline teeth (55).

8. The vehicle drive system (3) according to claim 3, further comprising:
a hollow ring member (90) located between an inner surface (43) of the intermediate shaft (40) that defines the insertion hole (42) and an outer surface (53) of the drive shaft (50), wherein
an end surface (94) of the ring member (90) faces the bottom surface (45) of the insertion hole (42), and
the third flow passage (86) comprises:
a first communication flow passage (181) defined in the intermediate shaft (40), wherein one end of the first communication flow passage (181) opens at an outer surface (46) of the intermediate shaft (40) and other end of the first communication flow passage (181) opens at the inner surface (43) of the intermediate shaft (40); and
a fourth communication flow passage defined in the ring member (90), wherein the fourth communication flow passage extends from a first position to a second position, the first position is adjacent to the other end of the first communication flow passage (181), and the second position is on the end surface (94) of the ring member (90).

9. The vehicle drive system (3) according to claim 8, wherein
the fourth communication flow passage is a groove (95) defined in an outer surface (91) of the ring member (90).

10. The vehicle drive system (3) according to claim 8 or 9, wherein
the ring member (90) is press-fitted in the insertion hole (42) of the intermediate shaft (40), and
the drive shaft (50) and the ring member (90) are spline-fitted to each other.
